(19) Europäisches Patentamt
European Patent Office
Office européen des brevets

(11) **EP 2 028 484 A1**

(12) **EUROPEAN PATENT APPLICATION**
published in accordance with Art. 153(4) EPC

(43) Date of publication:
**25.02.2009 Bulletin 2009/09**

(51) Int Cl.:
***G01N 29/02*** *(2006.01)*

(21) Application number: **07740600.7**

(22) Date of filing: **30.03.2007**

(86) International application number:
**PCT/JP2007/057164**

(87) International publication number:
**WO 2007/145011 (21.12.2007 Gazette 2007/51)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **15.06.2006 JP 2006166112**

(71) Applicant: **Murata Manufacturing Co. Ltd.**
**Nagaokakyo-shi, Kyoto 617-8555 (JP)**

(72) Inventors:
• **OKAGUCHI, Kenjiro**
**Nagaokakyo-shi, Kyoto 617-8555 (JP)**

• **HADA, Takuo**
**Nagaokakyo-shi, Kyoto 617-8555 (JP)**
• **KADOTA, Michio**
**Nagaokakyo-shi, Kyoto 617-8555 (JP)**

(74) Representative: **Lloyd, Patrick Alexander Desmond**
**Reddie & Grose**
**16 Theobalds Road**
**London**
**WC1X 8PL (GB)**

(54) **SENSOR FOR DETECTING SUBSTANCE IN LIQUID**

(57) Provided is a sensor for detecting a substance in liquid, the sensor being capable of measuring a substance to be detected in liquid with higher sensitivity and reliability.

A sensor 1 for detecting a substance in liquid includes a sensing oscillation circuit 11 and a reference oscillation circuit 21. The sensing oscillation circuit 11 includes a sensing SAW element 12 in which a reaction film formed so as to cover at least one IDT and to react with a substance in liquid is disposed and a first amplifier circuit 15. The reference oscillation circuit 21 includes a reference SAW element 22 and a second amplifier circuit 25. The reference SAW element 22 includes at least one IDT and no reaction film. The oscillation frequency of the sensing oscillation circuit 11 and the oscillation frequency of the reference oscillation circuit 21 are separated by $200 \times k^2$ (ppm) or more, where $k^2$ (%) is the electromechanical coupling coefficient of a piezoelectric substrate used in each of the sensing SAW element and the reference SAW element.

FIG. 1

**Description**

Technical Field

The present invention relates to sensors for detecting a substance in liquid using a surface-acoustic-wave element (SAW element), and more specifically, to a sensor for detecting a substance in liquid, the sensor including a sensing SAW element and a reference SAW element.

Background Art

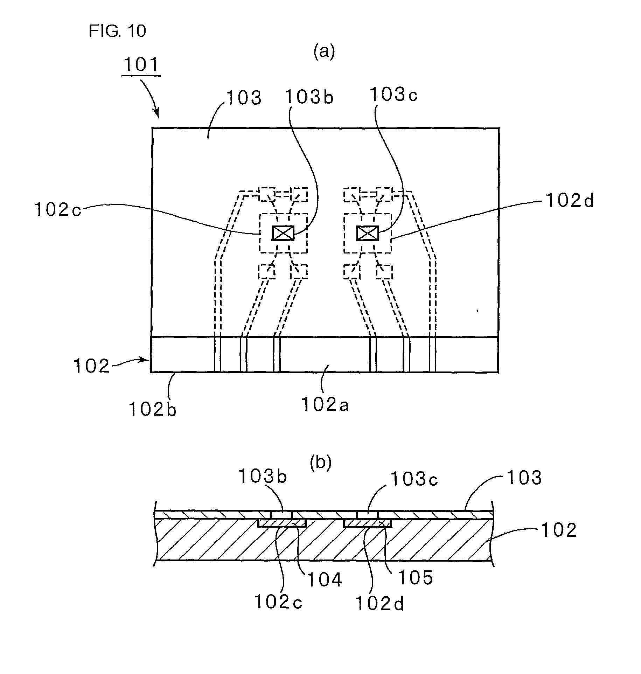

Various sensors have been developed for detecting a substance to be detected (detection-target substance) in liquid, for example, a protein. For example, Patent Document 1 listed below discloses a sensor for detecting a substance in liquid using a surface acoustic wave element. Fig. 10(a) is a plan view for describing a sensor for detecting a substance in liquid described in Patent Document 1, and Fig. 10(b) is a front cross-sectional view that illustrates a main portion thereof.

A sensor 101 for detecting a substance in liquid includes a base substrate 102. The base substrate 102 includes an upper surface 102a in which recesses 102c and 102d are formed at positions separated from a first end 102b. A sensing SAW element 104 and a reference SAW element 105 are disposed in the recesses 102c and 102d, respectively. A resin layer 103 having holes 103b and 103c facing the recesses 102c and 102d, respectively, is laminated on the base substrate 102.

The sensing SAW element 104 includes a piezoelectric substrate, an interdigital transducer (IDT) electrode formed on the piezoelectric substrate, and a reaction film formed so as to cover the IDT electrode. The reaction film is made of a material that can react with a detection-target substance in liquid as a sample and couple to the detection-target substance. The reference SAW element 105 has a configuration in which an IDT electrode is formed on a piezoelectric substrate, and the reference SAW element 105 has no reaction film.

In use, at least the portions in which the holes 103b and 103c are disposed are placed in liquid, and the reaction film of the sensing SAW element 104 reacts with and couples to a detection-target substance. Accordingly, in the sensing SAW element 104, a mass on the portion in which the IDT electrode is disposed is increased by the coupling to the detection-target substance. In contrast, in the reference SAW element 105, because the reaction film to react with the detection-target substance is not disposed, there is no increase of mass caused by the coupling to the detection-target substance.

In the sensor 101 for detecting a substance in liquid described in Patent Document 1, a change in the speed of sound of a surface-acoustic wave caused by an addition of mass in the sensing SAW element 104 is detected as a change in electrical signal. In this case, it is said that the detection-target substance is detectable with high precision by determination of the difference between an output from the sensing SAW element and an output from the reference SAW element.

A similar sensor for detecting a substance in liquid is also disclosed in Patent Document 2.
Patent Document 1: WO2006/027893A1
Patent Document 2: WO2006/027945A1

Disclosure of Invention

As described above, the sensor 101 for detecting a substance in liquid detects the presence or absence, the density, or the like, of a protein in liquid by use of the difference between an output signal from the sensing SAW element 104 and that from the reference SAW element 105. In this case, specifically, the difference between an oscillation frequency of an oscillation circuit containing the sensing SAW element and that of an oscillation circuit containing the reference SAW element is determined to detect the presence or absence or the density of the detection-target substance.

It is desired for the sensor 101 for detecting a substance in liquid that, when the detection-target substance is not present, the characteristic of the sensing SAW element 104 and that of the reference SAW element 105 be approximately equal.

However, when the detection-target substance comes into contact with the SAW elements 104 and 105, the difference between the oscillation frequency of the oscillation circuit containing the sensing SAW element 104 and that containing the reference SAW element 105 may be small. In such a case, both oscillations may be electromagnetically coupled, and both the oscillation frequencies may be exactly the same. For this reason, it is difficult to detect the detection-target substance in liquid reliably with high precision. Even when both oscillations are not coupled, measurement sensitivity may be small depending on the detection-target substance, and the detection-target substance may be undetectable.

It is an object of the present invention to overcome the above-described drawbacks in the related art and to provide a sensor for detecting a substance in liquid, the sensor being less prone to having a problem caused by coupling between the oscillation frequency of an oscillation circuit containing a sensing SAW element and that containing a reference SAW element and being capable of detecting a detection-target substance in liquid with higher sensitivity.

A sensor for detecting a substance in liquid according to the present invention includes a sensing oscillation circuit and a reference oscillation circuit. The sensing oscillation circuit includes a sensing surface-acoustic-wave (SAW) element and a first amplifier circuit. The sensing SAW element includes a piezoelectric substrate, at least one interdigital transducer (IDT) disposed on the piezoelectric substrate, and a reaction film formed so as to cover the IDT and to react with a substance in liquid. The first amplifier circuit is connected to the sensing SAW element. The reference oscillation circuit includes a reference SAW element and a second amplifier circuit. The reference SAW element includes a piezoelectric substrate, at least one IDT disposed on the piezoelectric substrate, and having no reaction film. The second amplifier circuit is connected to the reference SAW element. The piezoelectric substrate of the sensing SAW element and the piezoelectric substrate of the reference SAW element are made of the same piezoelectric material. Where an electromechanical coupling coefficient of each of the piezoelectric substrates is $k^2$ (%), an oscillation frequency of the sensing oscillation circuit and an oscillation frequency of the reference oscillation circuit are separated by $200 \times k^2$ (ppm) or more.

In the sensor for detecting a substance in liquid according to the present invention, the sensing SAW element and the reference SAW element may preferably have substantially the same frequency characteristic. In this case, because the difference between the characteristic of the sensing SAW element and that of the reference SAW element is small, the detection-target substance in liquid is detectable with higher precision.

In the sensor for detecting a substance in liquid according to the present invention, each of the sensing oscillation circuit and the reference oscillation circuit may preferably be an oscillation circuit including a matching circuit using LC, and a circuit constant of the sensing oscillation circuit and a circuit constant of the reference oscillation circuit may preferably be different. That is, by making the circuit constant of the sensing oscillation circuit and that of the reference oscillation circuit different, the oscillation frequency of the sensing oscillation circuit and the oscillation frequency of the reference oscillation circuit can be made different from each other by $200 \times k^2$ (ppm) or more.

In the sensor for detecting a substance in liquid according to the present invention, the sensing oscillation circuit may include a first microstrip line, the reference oscillation circuit may include a second microstrip line, and the first and second microstrip lines may have different shapes to separate the oscillation frequency of the sensing oscillation circuit and that of the reference oscillation circuit by the above specific difference in frequency. In this case, the oscillation frequency of the sensing oscillation circuit and the oscillation frequency of the reference oscillation circuit can be easily made different from each other by $200 \times k^2$ (ppm) or more merely by selecting the shapes of the microstrip lines.

In the sensor for detecting a substance in liquid according to the present invention, a configuration in which the oscillation frequency of the above sensing oscillation circuit and that of the reference oscillation circuit are separated by $200 \times k^2$ (ppm) or more may be accomplished by making the impedance of a first amplifying element included in the first amplifier circuit and that of a second amplifying element included in the second amplifier circuit different.

In the present invention, a 30° to 50° rotated Y-plate X-propagation lithium tantalate ($LiTaO_3$) substrate may preferably be used as the piezoelectric substrate. In this case, the presence or absence and the density of the detection-target substance in liquid are detectable with higher precision.

Each of the sensing SAW element and the reference SAW element can be formed from a SAW element that uses various surface-acoustic waves. Preferably, a SAW element that uses surface acoustic waves composed principally of shear-horizontal (SH) waves may be used. In this case, each of the sensing SAW element and the reference SAW element can be formed as an end-surface-reflection surface-acoustic-wave element. Accordingly, the sensing SAW element and the reference SAW element can be smaller in size.

(Advantages)

In the sensor for detecting a substance in liquid according to the present invention, because the oscillation frequency of the sensing oscillation circuit and that of the reference oscillation circuit are separated by $200 \times k^2$ (ppm) or more, even if variations in the amount of change in frequency when liquid is attached to the sensing SAW element and the reference SAW element are relatively large, the oscillation of the sensing oscillation circuit and that of the reference oscillation circuit are less prone to being coupled to each other. Accordingly, the presence or absence and the density of a detection-target substance in liquid are detectable with higher sensitivity and reliability on the basis of a change of mass caused by reaction of the detection-target substance in liquid and the reaction film.

Brief Description of Drawings

[Fig. 1] Fig. 1 is a block diagram for describing a sensor for detecting a substance in liquid according to one embodiment of the present invention.

[Fig. 2] Fig. 2 is a cross-sectional view that schematically illustrates a configuration of a sensing SAW element.

[Fig. 3] Fig. 3 is a cross-sectional view that schematically illustrates a configuration of a reference SAW element.

[Fig. 4] Fig. 4 is a circuit diagram that illustrates an open-loop circuit model for describing a condition for oscillation of a sensing oscillation circuit according to one embodiment of the present invention.

[Fig. 5] Fig. 5 illustrates a change with time of the difference in frequency between oscillation circuits of a sensor for detecting a substance in liquid according to one embodiment of the present invention and of sensors for detecting a substance in liquid prepared for comparison having differences in frequency, df, of -100 ppm, -50 ppm, and +800 ppm, and 1000 ppm.

[Fig. 6] Fig. 6 illustrates a change with time of the difference in frequency between both oscillation circuits of a sensor for detecting a substance in liquid prepared for comparison having a difference in frequency, df, of 570 ppm.

[Fig. 7] Fig. 7 illustrates a change with time of the difference in frequency between the sensing oscillation circuit and the reference oscillation circuit of a sensor for detecting a substance in liquid according to one embodiment of the present invention having a difference in frequency, df, of 1320 ppm.

[Fig. 8] Fig. 8 illustrates a change with time in sensitivity of a sensor for detecting a substance in liquid according to one embodiment of the present invention and that according to a related-art example.

[Fig. 9] Fig. 9 is a block diagram of a sensor for detecting a substance in liquid according to a modification example in which each of a sensing oscillation circuit and a reference oscillation circuit has a microstrip line.

[Fig. 10] Fig. 10(a) is a plan view that illustrates one example of a traditional sensor for detecting a substance in liquid, and Fig. 10(b) is a front cross-sectional view that illustrates a main portion thereof. Reference Numerals

| 1 | sensor for detecting substance in liquid |
| 2 | differential amplifier circuit |
| 11 | sensing oscillation circuit |
| 12 | sensing SAW element |
| 13, 14 | matching circuits |
| 15 | first amplifier circuit |
| 21 | reference oscillation circuit |
| 22 | reference SAW element |
| 23, 24 | matching circuits |
| 25 | second amplifier circuit |
| 41 | sensor for detecting substance in liquid |
| 42, 43 | first and second microstrip lines |
| a, b | ports |

Best Mode for Carrying Out the Invention

The present invention will be clarified below by description of specific embodiments of the present invention with reference to the drawings.

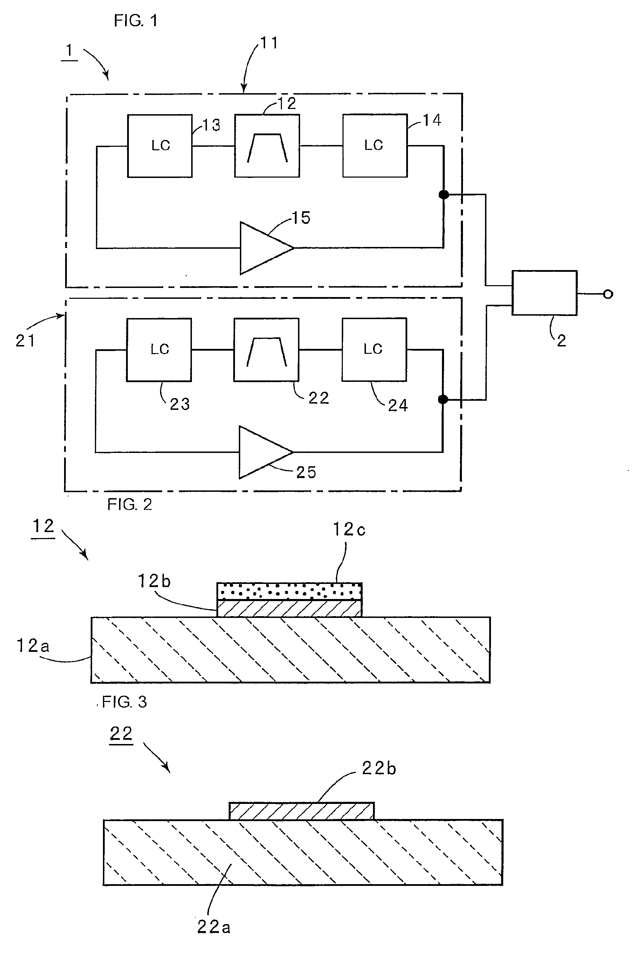

Fig. 1 is a block diagram that illustrates a circuit configuration of a sensor for detecting a substance in liquid according to one embodiment of the present invention. The sensor 1 for detecting a substance in liquid includes a sensing oscillation circuit 11 and a reference oscillation circuit 21.

The sensing oscillation circuit 11 includes a sensing SAW element 12, LC matching circuits 13 and 14 connected to the sensing SAW element 12, and a first amplifier circuit 15. Specifically, in the sensing oscillation circuit, the sensing SAW element 12 is connected to the matching circuits 13 and 14 each made up of an LC circuit and to the first amplifier circuit 15, these components form a closed-loop oscillation circuit.

Likewise, in the reference oscillation circuit 21, a reference SAW element 22 has a first end connected to a matching circuit 23 made up of an LC circuit and a second end connected to a matching circuit 24 similarly made up of an LC circuit, and a second amplifier circuit 25 is connected between the matching circuits 23 and 24.

In the sensor 1 for detecting a substance in liquid, the sensing oscillation circuit 11 and the reference oscillation circuit 21 are connected to a differential amplifier circuit 2. Specifically, the sensing oscillation circuit 11 is connected to a first input terminal of the differential amplifier circuit 2 and provides the first input terminal with an output of the sensing oscillation circuit. The reference oscillation circuit 21 is connected to a second input terminal of the differential amplifier circuit 2 so as to provide the second input terminal with an output of the reference oscillation circuit 21. By use of the differential amplifier circuit 2, a difference in frequency based on the difference between an oscillation frequency of the sensing oscillation circuit and that of the reference oscillation circuit is obtainable.

Each of the sensing SAW element 12 and the reference SAW element 22 can be constructed using a SAW element in which an IDT is formed on a piezoelectric substrate, for example. As schematically illustrated in Fig. 2, in the sensing SAW element 12, an IDT 12b is formed on the top surface of a piezoelectric substrate 12a, and a reaction film 12c is formed so as to cover the IDT 12b. In the reference SAW element 22, as schematically illustrated in Fig. 3, an IDT electrode 22b is formed on a piezoelectric substrate 22a. The reference SAW element has no reaction film 12c.

Figs. 2 and 3 illustrate the single IDT 12b in the sensing SAW element 12 and the single IDT 22b in the reference SAW element 22. However, in actuality, each of the sensing SAW element 12 and the reference SAW element 22 has two IDTs arranged in parallel in the direction in which surface acoustic waves travel. In the present invention, it is noted that each of the sensing SAW element and the reference SAW element may be a SAW element having a single IDT or may also be one having two or more IDTs, as described above.

When the above sensing SAW element 12 is made to come into contact with liquid containing a detection-target substance, the reaction film 12c reacts with the detection-target substance, and the protein, for example, is coupled to the reaction film 12c. As a result, a mass on each of the IDTs 12b is increased. This change of the increased mass varies an output frequency of the sensing oscillation circuit 11. The presence or absence or the density of the detection-target substance is measured on the basis of this change in frequency.

The above reaction film 12c is made of a suitable material that can react with a detection-target substance in liquid. For example, to measure an antigen or antibody in liquid, a film in which the antigen or antibody is immobilized can be used as the reaction film. In this case, the antigen or antibody in liquid is coupled to the antigen or antibody immobilized in the reaction film, and an immune complex is thus formed. This formation varies a mass on the portion in which the IDT is disposed. Such a reaction film made of a suitable material that can react with a detection-target substance in liquid and vary a mass on the portion in which the IDT is disposed can be selected as the reaction film 12c depending on the nature of the detection-target substance. The detection-target substance is not limited to an antigen and antibody and can be various biochemical materials, including a protein. Also, it is not limited to such biochemical materials. Various elements and inorganic compounds can be a target material to be detected. That is, the sensor for detecting a substance in liquid according to the present invention is suitably used as a biosensor for detecting a biogenic substance, such as an antigen, antibody, or protein. However, it is not limited to the biosensor and can be used for detecting various substances.

To remove noise caused by a change in temperature, the reference oscillation circuit 21 using the reference SAW element 22 is also disposed. That is, background noise and noise caused by a change in temperature are removed by subtraction of a result obtained in the reference oscillation circuit 21 from a result obtained in the sensing oscillation circuit 11. Accordingly, the presence or absence and the density of a detection-target substance are detectable accurately.

In addition, in the sensor 1 for detecting a substance in liquid according to the present embodiment, the oscillation frequency of the above sensing oscillation circuit 11 and that of the reference oscillation circuit 21 are separated by $200 \times k^2$ (ppm) or more, where $k^2$ is the electromechanical coupling coefficient of the piezoelectric substrate included in each of the sensing SAW element 12 and the reference SAW element 22. It is noted that the sensing SAW element 12 and the reference SAW element 22 are formed as different chip components. The piezoelectric substrate and the IDT electrodes of the sensing SAW element and those of the reference SAW element are the same, respectively.

In the present embodiment, as described above, the oscillation frequency of the sensing oscillation circuit and that of the reference SAW element are separated by $200 \times k^2$ (ppm) or more. Thus, the quality of a substance in liquid can be measured with higher sensitivity and reliability. This will be described more specifically.

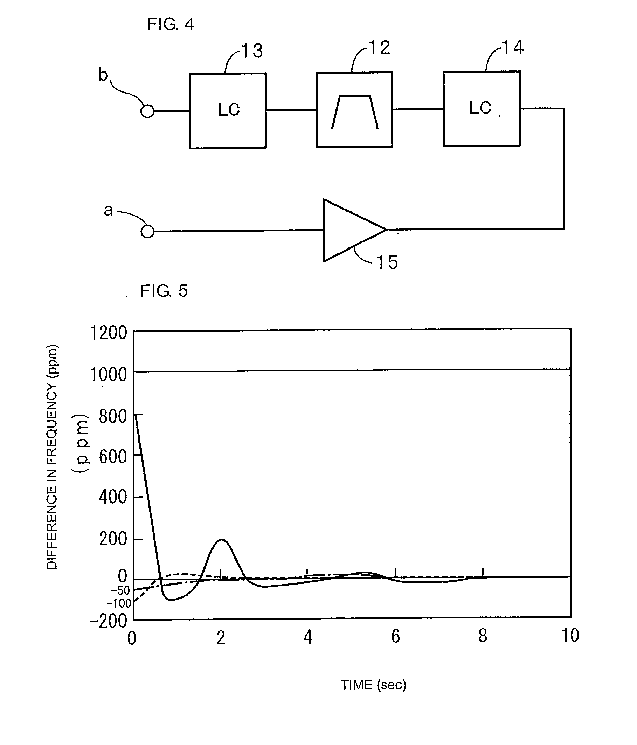

An oscillation of the above sensing oscillation circuit 11 is discussed using the open-loop circuit illustrated in Fig. 4 as a model.

The open-loop circuit illustrated in Fig. 4 includes ports a and b. In this open-loop circuit, from the port a toward the port b, the first amplifier circuit 15, the matching circuit 14, the sensing SAW element 12, and the matching circuit 13 are connected in sequence. Conditions for oscillation of this open-loop circuit are the satisfaction of the following expressions (1) and (2).

· Amplitude Condition

$$|\text{Sab}| \geq 0 \text{ (dB)} \qquad \cdots (1)$$

· Shift Condition

$$\angle \text{Sab} = 360 \times n \text{ (deg)} \qquad \cdots (2)$$

where n is an integer.

That is, to make the circuit oscillate, it is necessary to set a circuit constant of the sensing oscillation circuit 11 at a value at which the loop gain is at or above 0 dB and the phase shift is 0. Examples of the circuit constant include a value in which the amplification factor of the amplifier circuit 15 or the inductance L or the capacitance C in the matching circuit 13 or 14 is adjusted. By selecting this circuit constant, that is, by setting the circuit constant so as to satisfy the expressions (1) and (2), the sensing oscillation circuit 11 can be made to oscillate, and the oscillation frequency thereof can be set.

For example, when a 36° Y-cut X-propagation lithium tantalate ($LiTaO_3$) substrate is used as the piezoelectric substrate, the value of the inductance L or capacitance C may be adjusted such that the expressions (1) and (2) are satisfied and such that the oscillation frequency of the sensing oscillation circuit 11 is smaller than that of the reference oscillation circuit 21. That is, by adjustment of the value of the inductance component L or the value of the capacitance component C of the matching circuit 13 or 14, the oscillation frequency of the sensing oscillation circuit 11 in an initial state at which a detection-target substance is not coupled to the reaction film can be made lower than the oscillation frequency of the reference oscillation circuit 21, as described above. By setting the difference between the oscillation frequency of the sensing oscillation circuit 11 and that of the reference oscillation circuit 21 at 1000 ppm or more, both the oscillations can be prevented from being coupled, so measurement can be performed with high precision.

It is noted that the electromechanical coupling coefficient $k^2$ (%) of the 36° Y-cut X-propagation $LiTaO_3$ is 5.0 (%). Accordingly, 1000 ppm or more satisfies $200 \times k^2$ (ppm).

That is, as illustrated in Fig. 5, a plurality of types of sensors for detecting a substance in liquid were produced in which the circuit constant of each of the sensing oscillation circuit 11 and the reference oscillation circuit 21 was adjusted such that the difference in oscillation frequency between both oscillation circuits was -100 ppm, - 50 ppm, or +800 ppm, or +1000 ppm in an initial state. These sensors for detecting a substance in liquid were placed in phosphate buffered saline (PBS) as a sample. This sample is liquid that contains no detection-target substance. As is clear from Fig. 5, when the difference in frequency is -100 ppm, -50 ppm, and +800 ppm, the difference in frequency is disappearing with the lapse of time, that is, it disappears within 10 seconds. In contrast, it is found that when the oscillation frequency of the sensing oscillation circuit 11 and the oscillation frequency of the reference oscillation circuit in an initial state is 1000 ppm, the difference in frequency is constant and does not become small with the lapse of time. It can be considered that this is because the oscillation frequency of the sensing oscillation circuit 11 and that of the reference oscillation circuit 21 are separated sufficiently and thus both are not coupled. That is, in the case where the difference in frequency between both the oscillation circuits is less than 1000 ppm, as is clear from Fig. 5, the oscillation of the sensing oscillation circuit 11 and that of the reference oscillation circuit 21 are coupled to each other with a lapse of time, and the difference in frequency between both disappears.

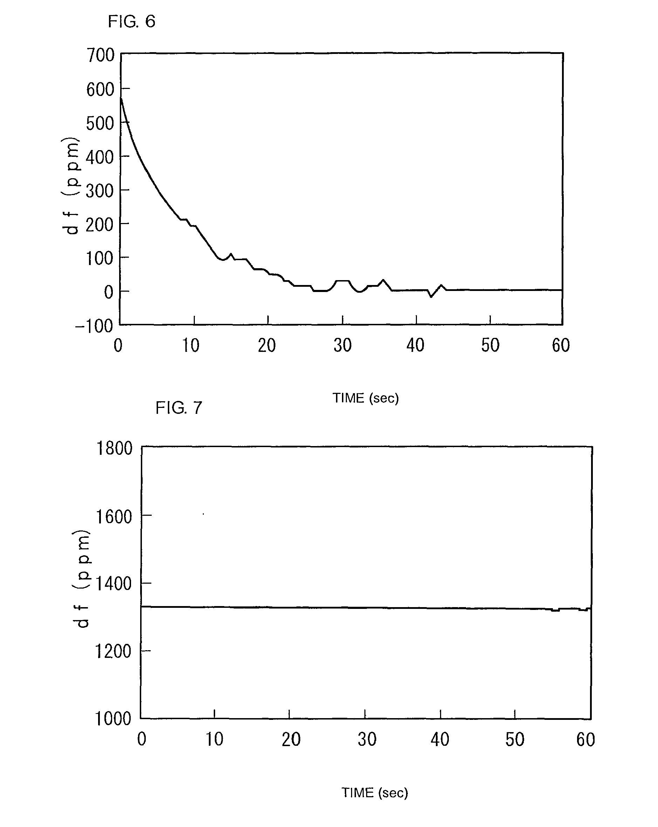

The electromechanical coupling coefficient and the bandwidth are in proportional to each other. Accordingly, where the above difference in frequency at which no coupling occurs is df, when the electromechanical coupling coefficient of the piezoelectric substrate is $k^2$ (%), df (ppm) can be set at a value equal to or larger than the electromechanical coupling coefficient $k^2 \times A$ (ppm) (where A is a constant of a comparison example), and, from the results of Fig. 5, $df \geq k^2 \times 200$ (ppm) can be satisfied. That is, in the case of the 36° Y-cut X-propagation $LiTaO_3$ substrate, the electromechanical coupling coefficient $k^2$ is 5.0%, and, from the results of Fig. 5, the difference df between the oscillation frequency of the sensing oscillation circuit 11 and that of the reference oscillation circuit 21 can be set at 1000 ppm or more. From these results, it is found that, when $df \geq k^2 \times 200$ (ppm), coupling between the oscillation of the reference oscillation circuit and that of the sensing oscillation circuit can be avoided and thus a substance in liquid is detectable with higher reliability. This will be described more specifically with reference to Figs. 6 to 8.

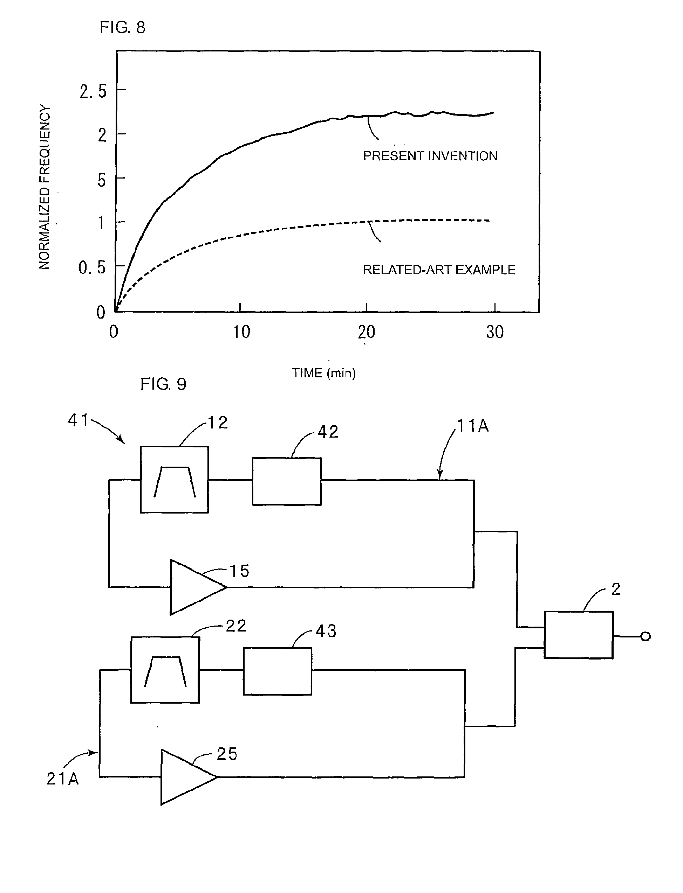

The above sensor 1 for detecting a substance in liquid being set such that df is 1320 ppm and a sensor for detecting a substance in liquid being set such that df is 570 ppm in a related-art example for comparison were prepared, PBS was prepared as a sample, and measurement was performed. Fig. 8 illustrates a change in sensitivity with time when the sensor for detecting a substance in liquid in the above embodiment and that in the related art were used. In Fig. 8, the vertical axis represents the normalized frequency corresponding to sensitivity and the horizontal axis represents the time.

As is clear from Fig. 8, the present embodiment can detect a substance to be measured with higher sensitivity, compared with the related-art example, because the oscillation frequency of the sensing oscillation circuit 11 and that of the reference oscillation circuit 21 are not the same.

Fig. 6 illustrates a change with time of the difference in frequency, df, between the sensing oscillation circuit 11 and the reference oscillation circuit 21 in the above related-art example. Fig. 7 illustrates a change with time of the difference in frequency, df, in the sensor for detecting a substance in liquid in the above embodiment. As is clear from Fig. 6, in the related-art example, the difference in frequency is zero after a lapse of 30 seconds. In contrast, in the present embodiment illustrated in Fig. 7, it is found that the difference in frequency is constant at 1320 ppm/°C.

Accordingly, the sensor for detecting a substance in liquid according to the present embodiment can detect the presence or absence and the density of a substance in liquid with higher sensitivity and reliability because the oscillation of the sensing oscillation circuit 11 and that of the reference oscillation circuit 21 are less prone to being electromagnetically coupled to each other.

The oscillation frequency of each of the sensing oscillation circuit 11 and the reference oscillation circuit 21 can be adjusted using various methods, such as adjusting L or C of the matching circuit, as previously described, inserting a resistance R, changing a wire length of a connection between circuit components, a line width, or a gap to the ground potential, or controlling a feedback capacitance of an IC using an electric power.

As in a sensor 41 for detecting a substance in liquid according to a modification example, which is schematically illustrated in Fig. 9, a sensing oscillation circuit 11A may include a first microstrip line 42, and a reference oscillation circuit 21A may include a second microstrip line 43. In this case, the separation of the oscillation frequency of the sensing oscillation circuit 11A and that of the reference oscillation circuit by $200 \times k^2$ (ppm) or more can be accomplished by making the shape of the first microstrip line 42 and that of the second microstrip line 43 different in terms of width, length, or like.

The first and second amplifier circuits 15 and 25 may include first and second amplifying elements, respectively. The separation of the oscillation frequency of the sensing oscillation circuit 11 and that of the reference oscillation circuit by $200 \times k^2$ (ppm) or more can be accomplished by making the impedance of the first amplifying element and that of the second amplifying element different.

In the above embodiment, the 36° Y-cut X-propagation $LiTaO_3$ substrate is used as the piezoelectric substrate. However, the piezoelectric substrate is not limited to that substrate. For example, it can be made of a suitable piezoelectric single crystal, such as a $LiTaO_3$ substrate of another crystal orientation, or a lithium niobate ($LiNbO_3$) substrate, or piezoelectric ceramic. Preferably, a 30° to 40° Y-cut X-propagation $LiTaO_3$ substrate may be used, and this enables a detection-target substance in liquid to be detected with high sensitivity and reliability.

The SAW elements used in the above embodiment are not limited to a particular one. SAW elements that utilize various kinds of surface-acoustic wave, such as Rayleigh waves or shear-horizontal (SH) waves, can be used. If surface-acoustic waves composed principally of SH waves are used, an end-surface-reflection SAW device can be constructed. As a result, the sensor for detecting a substance in liquid can be smaller in size.

Each of the above SAW elements can also be a SAW resonator or a SAW filter.

**Claims**

1. A sensor for detecting a substance in liquid, the sensor comprising:

   a sensing oscillation circuit including a sensing surface-acoustic-wave (SAW) element and a first amplifier circuit, the sensing SAW element including a piezoelectric substrate, at least one interdigital transducer (IDT) disposed on the piezoelectric substrate, and a reaction film formed so as to cover the IDT and to react with a substance in liquid, the first amplifier circuit being connected to the sensing SAW element; and
   a reference oscillation circuit including a reference SAW element and a second amplifier circuit, the reference SAW element including a piezoelectric substrate, at least one IDT disposed on the piezoelectric substrate, and having no reaction film, the second amplifier circuit being connected to the reference SAW element,

   wherein the piezoelectric substrate of the sensing SAW element and the piezoelectric substrate of the reference SAW element are made of the same piezoelectric material, and, where an electromechanical coupling coefficient of each of the piezoelectric substrates is $k^2$ (%), an oscillation frequency of the sensing oscillation circuit and an oscillation frequency of the reference oscillation circuit are separated by $200 \times k^2$ (ppm) or more.

2. The sensor for detecting a substance in liquid according to Claim 1, wherein the sensing SAW element and the reference SAW element have substantially the same frequency characteristic.

3. The sensor for detecting a substance in liquid according to Claim 1 or 2, wherein each of the sensing oscillation circuit and the reference oscillation circuit is an oscillation circuit including a matching circuit using LC, and a circuit constant of the sensing oscillation circuit and a circuit constant of the reference oscillation circuit are different.

4. The sensor for detecting a substance in liquid according to Claim 1 or 2, wherein the sensing oscillation circuit includes a first microstrip line, the reference oscillation circuit includes a second microstrip line, and the first and second microstrip lines have different shapes.

5. The sensor for detecting a substance in liquid according to Claim 1 or 2, wherein the first amplifier circuit and the second amplifier circuit include a first amplifying element and a second amplifying element, respectively, and an impedance of the first amplifying element and an impedance of the second amplifying element are different.

6. The sensor for detecting a substance in liquid according to any one of Claims 1 to 5, wherein the piezoelectric substrate is a 30° to 50° rotated Y-plate X-propagation lithium tantalate ($LiTaO_3$) substrate.

7. The sensor for detecting a substance in liquid according to any one of Claims 1 to 6, wherein each of the sensing SAW element and the reference SAW element is a SAW element that uses surface acoustic waves composed principally of shear-horizontal (SH) waves.

FIG. 1

FIG. 2

FIG. 3

FIG. 4

FIG. 5

TIME (sec)

FIG. 6

FIG. 7

FIG. 8

FIG. 9

FIG. 10

(a)

<u>101</u>

(b)

**EP 2 028 484 A1**

<table>
<tr><td colspan="2"><strong>INTERNATIONAL SEARCH REPORT</strong></td><td>International application No.<br>PCT/JP2007/057164</td></tr>
</table>

A. CLASSIFICATION OF SUBJECT MATTER
*G01N29/02* (2006.01) i

According to International Patent Classification (IPC) or to both national classification and IPC

B. FIELDS SEARCHED

Minimum documentation searched (classification system followed by classification symbols)
G01N29/00-29/52, G01N5/00-5/04, H01L41/00-41/26, H03B5/30-5/42

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)
JST7580(JDream2), JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| A | JP 3481298 B2 (Fuji Kogyo Co., Ltd.),<br>10 October, 2003 (10.10.03),<br>Full text; all drawings<br>& JP 7-260476 A | 1-7 |
| A | JP 3488554 B2 (Fuji Kogyo Co., Ltd.),<br>31 October, 2003 (31.10.03),<br>Full text; all drawings<br>& JP 9-80035 A | 1-7 |
| A | Jun KONDO, Shoko SHIOKAWA, "Suberi Dansei Hyomenha Sensor o Mochiita Ekitai Shiryo no Shikibetsu", The Transactions of the Institute of Electronics, Information and Communication Engineers, Vol.J78-C-II, No.1, 1995, pages 54 to 61 | 1-7 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28 May, 2007 (28.05.07) | Date of mailing of the international search report<br>05 June, 2007 (05.06.07) |
|---|---|
| Name and mailing address of the ISA/<br>Japanese Patent Office | Authorized officer |
| Facsimile No. | Telephone No. |

Form PCT/ISA/210 (second sheet) (April 2005)

14

**INTERNATIONAL SEARCH REPORT**

| International application No. |
|---|
| PCT/JP2007/057164 |

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2006/27893 A1  (Murata Mfg. Co., Ltd.), 16 March, 2006 (16.03.06), Full text; all drawings (Family: none) | 1-7 |
| A | JP 2006-47229 A  (Riba Eretekku Kabushiki Kaisha), 16 February, 2006 (16.02.06), Full text; all drawings (Family: none) | 1-7 |
| A | WO 2005/3752 A1  (Murata Mfg. Co., Ltd.), 13 January, 2005 (13.01.05), Full text; all drawings (Family: none) | 1-7 |
| A | JP 6-308127 A  (Hewlett-Packard Co.), 04 November, 1994 (04.11.94), Full text; all drawings & US 5306644 A | 1-7 |
| A | JP 5-322736 A  (Koji TODA), 07 December, 1993 (07.12.93), Full text; all drawings (Family: none) | 1-7 |
| A | Gi-Beum Kim, Woo-Suk Chong, Seong-Hyun Kim, Kyong Kim, Seong-Hwan Jeong, Tae-Kyu Kwon, Nam-Gyun Kim, Chul-Un Hong, "Development of Biosensor Using Surface Acoustic Wave", The 30th Annual Conference of the IEEE Industrial Electronics Society, Volume II, 2004, p. 1546-1549 | 1-7 |
| A | Showko SHIOKAWA and Jun KONDOH, "SURFACE ACOUSTIC WAVE SENSOR FOR LIQUID-PHASE APPLICAION", 1999 IEEE ULTRASONICS SYMPOSIUM, VOL 1, 1999, p. 445-452 | 1-7 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006027893 A1

- WO 2006027945 A1